# EUROPÄISCHE PATENTANMELDUNG

(11) **EP 3 936 814 A1**
(43) Veröffentlichungstag der Anmeldung: **12.01.2022**
(21) Anmeldenummer: 21183357.9
(22) Anmeldetag: 02.07.2021
(51) Int. Cl.: F42B 39/16, A62C 3/06

(54) **SICHERHEITSBEHÄLTNIS**

(30) Priorität: 10.07.2020 DE 102020208666
(71) Anmelder: Sommer Fassadensysteme-Stahlbau-Sicherheitstechnik GmbH & Co. KG, 95182 Döhlau (DE)
(72) Erfinder: SOMMER, Oliver, 95028 Hof (DE); HOFMANN, Jürgen, 95182 Tauperlitz (DE)
(74) Vertreter: Isarpatent

(57) **Zusammenfassung**

Die vorliegende Erfindung betrifft ein Sicherheitsbehältnis zum Transport oder zur Lagerung von brennbaren und/oder explosiven Gütern, mit einem Behälter und einem Deckel, wobei in dem Behälter zumindest ein brennbares und/oder explosives Gut anordenbar ist, und der Deckel den Behälter für zumindest einen Zeitraum t1 gas- und rauchdicht verschließt, mit einer in dem Behälter und/oder in dem Deckel integrierten Löscheinrichtung, wobei das Sicherheitsbehältnis aus einem nicht brennbaren Material ausgebildet ist und über zumindest den Zeitraum t1 gas- und rauchdicht verbleibt.

## Beschreibung

### GEBIET DER ERFINDUNG

Die vorliegende Erfindung betrifft ein Sicherheitsbehältnis zum Transport oder zur Lagerung von brennbaren und/oder explosiven Gütern.

### TECHNISCHER HINTERGRUND

Sicherheitsbehälter wie Transportbehälter oder Lagerungsbehälter werden für unterschiedliche Anwendungen eingesetzt. Für die Verpackung, Lagerung und/oder den Transport von gefährlichen Gütern bzw. explosiven Stoffen müssen besondere Sicherheitsvorschriften beachtet werden, um ein Entzünden bzw. eine Ausbreitung oder Explosion eines entfachten Brandes zu verhindern.

Brennbare und/oder explosive Güter oder Stoffe können beispielsweise Lithiumbatterien, Lithiumionen-Akkumulatoren, Chemikalien oder auch Munition sein. Durch die Verbreitung der Elektromobilität sowie den zunehmenden Gebrauch von mobilen Endgeräten werden vermehrt Lithiumbatterien über unterschiedliche Transportwege an den gewünschten Einsatzort transportiert. Dies können u. A. Batterien für PKWs, Elektrofahrräder, Pedelecs oder auch Rennfahrzeuge sein.

Ein Transport kann beispielsweise per Flugzeug, Schienenfahrzeug oder Straßenfahrzeug erfolgen. Bei dem Transport von Lithiumbatterien per Flugzeug ist das Regelwerk für den Transport von Gefahrgut der internationalen Zivilluftfahrtorganisation zu beachten. Dabei muss unter anderem eine Verpackung der Gefahrgüter nach besonderen Richtlinien vorgenommen werden. Des Weiteren ist der Transport von Lithiumbatterien aktuell für Frachtmaschinen, jedoch nicht für Passagiermaschinen erlaubt.

Auch für andere Transportmittel, wie beispielsweise mit Schienenfahrzeugen, Schiffen oder LKWs sind weitere Regelwerke zu beachten. Allgemein anzuwendende bzw. zu beachtende Normen sind beispielsweise BAM SV 376, P 908 ADR, LP 904, P 911, LP 906, Verpackungsgruppe I (ADR, IATA-GDR, RID, ICAO-TI, IMDG) 7. SV 310, P 910, LP 905, UN (3090, 3480, 3481), Verpackungsgruppe II (ADR, RID), Sondervorschrift 377, Verpackungsanweisung 909, EN 45545-2, MIL-STD-810, UN 6A, 6B, 6C, IP68 und ATA 300. Ebenso sollte der Militärstandard erfüllt werden. Für den Transport werden an die Transport- bzw. Lagerbehältnisse daher besondere Anforderungen gestellt.

Die Druckschrift US 2013/0146603 A1 zeigt einen Brandschutzkoffer für tragbare elektrische Geräte wie beispielsweise Laptops. Der Koffer besteht aus einem Behälter mit einem klappbar angeordneten Deckel, jeweils aufweisend eine flammhemmende Isolierung. An der Oberseite des Deckels ist von außen ein Löschelement angeordnet, das einen Wassertank aufweist, der über ein Einspritzelement mit dem Inneren des Koffers verbunden ist. Um den bei einem Brand sowie Löschvorgang entstehenden Überdruck im Kofferinneren auszugleichen, ist im Deckel ein mehrstufiger Gasfilter vorgesehen, über welchen zum Druckausgleich die gefilterten Gase aus dem Inneren des Koffers in die Atmosphäre geleitet werden.

Nachteilig ist bei einem derartigen Behältnis, dass bei einem Brand im Innern des Koffers über den mehrstufigen Gasfilter heiße Luft aus dem Inneren des Koffers in die Umgebung gelangt, wodurch direkt bei Entstehen des Brandes eine Beeinflussung der Atmosphäre außerhalb des Koffers stattfindet. Insbesondere bei einem Transport per Flugzeug stellt dies eine ungewollte sowie gefährliche Beeinflussung der Atmosphäre innerhalb des Flugzeugkörpers dar.

Weitere Nachteile ergeben sich, wenn eine Mehrzahl von baugleichen Brandschutzkoffern platzsparend transportiert werden sollen. Durch das auf dem Deckel angeordnete Löschelement sowie die dort vorliegenden Öffnungen des Gasfilters können derartige Brandschutzkoffer nicht übereinander gestapelt werden.

### ZUSAMMENFASSUNG DER ERFINDUNG

Vor diesem Hintergrund liegt der vorliegenden Erfindung die Aufgabe zugrunde, ein verbessertes Sicherheitsbehältnis anzugeben.

Erfindungsgemäß wird diese Aufgabe durch ein Sicherheitsbehältnis mit den Merkmalen des Patentanspruchs 1 gelöst.

Demgemäß ist vorgesehen:
Ein Sicherheitsbehältnis zum Transport oder zur Lagerung von brennbaren und/oder explosiven Gütern, mit einem Behälter und einem Deckel, wobei in dem Behälter zumindest ein brennbares und/oder explosives Gut anordenbar ist, und der Deckel den Behälter für zumindest einen Zeitraum t1 gas- und rauchdicht verschließt, mit einer in den Behälter und/oder in dem Deckel integrierte Löscheinrichtung, wobei das Sicherheitsbehältnis aus einem nicht brennbaren Material ausgebildet ist und über zumindest den Zeitraum t1 gas- und rauchdicht verbleibt.

Die der vorliegenden Erfindung zugrundeliegende Erkenntnis besteht darin, dass durch ein kompaktes und an den Seitenflächen im Wesentlichen eben ausgebildetes Sicherheitsbehältnis eine platzsparende Lagerung bzw. ein platzsparender Transport mehrerer derartiger Behältnisse neben- sowie aufeinander erfolgen kann.

Die der vorliegenden Erfindung zugrundeliegende Idee besteht darin, dass durch ein gas- sowie rauchdichtes Dichtung- und Verschlusssystem sowie eine im Behälter bzw. im Deckel integrierte Löscheinrichtung eine kompakte Bauart erreicht werden kann.

Darüber hinaus ist mit einem derartigen Sicherheitsbehältnis ein Transport möglich, bei welchem zumindest über den Zeitraum t1 kein Luftaustausch zwischen einem Innenraum innerhalb des Sicherheitsbehältnisses sowie der Atmosphäre stattfindet. Dadurch ist der Transport von gefährlichen Gütern in Flugzeugen, Schiffen und allen Landfahrzeugen entsprechend der gültigen Vorschriften und Normen gefahrlos möglich.

Ferner kann das Sicherheitsbehältnis vorteilhaft durch geeignete Bauart einem sehr hohen Innendruck widerstehen. Wichtig sind beispielsweise die Verbindung zwischen dem Behälter und dem Deckel, die beispielsweise in Seitenbereichen und/oder in Eckbereichen des Sicherheitsbehältnisses angeordnet sein können. Wenn die Verbindungen einem hohen Innendruck standhalten können, so kann eine hohe Dichtigkeit, insbesondere bezüglich Gas und Rauch, sichergestellt werden.

Bei hoher Robustheit, insbesondere durch geeignete Materialwahl bzw. eine geeignete Materialkombination, kann das Sicherheitsbehältnis auch einen sogenannten Fall-Test bestehen. Insbesondere muss auch nach einem Fall-Test die Dichtigkeit sichergestellt sein.

Der Behälter sowie der Deckel können unterschiedliche Ausgestaltungen aufweisen. Bevorzugt bilden diese ein quadratisches oder rechteckiges Sicherheitsbehältnis aus. Vorteilhafterweise sind die Seitenflächen des Deckels bzw. des Behälters im Wesentlichen eben ausgebildet. Dies bedeutet, dass bevorzugt keine Bauelemente an den Seitenflächen überstehen. Insbesondere kann eine Kontaktfläche zwischen Behälter und Deckel ohne nennenswerten Überstand außerhalb des Sicherheitsbehältnisses ausgebildet sein. Weitere angeordnete Verschlusselemente zur Fixierung von Deckel und Behälter sind daher bevorzugt sehr flach ausgebildet und/oder können in dem Behälter bzw. in dem Deckel, insbesondere in der Behälter- und/oder Deckelwandung, versenkbar sein.

Als eben ausgebildete Seitenfläche ist weiterhin zu verstehen, dass eine Oberseite des Deckels eben ausgebildet ist, ohne dass Bauelemente, wie Filterelemente, Öffnungen oder eine Löscheinrichtung, an der Oberfläche angeordnet sind und dort überstehen. So können mehrere baugleiche Sicherheitsbehältnisse platzsparend übereinander gestapelt werden. Ein dort angebrachter Transportgriff ist bevorzugt einklappbar ausgebildet. Der gleiche Vorteil ergibt sich auch für die Seitenflächen, wenn beispielsweise die Verschlusselemente versenkbar ausgebildet sind. Dadurch kann das Sicherheitsbehältnis zu allen Seiten eben ausgebildet sein und auch nebeneinander platzsparend gelagert bzw. gestapelt werden.

Mit anderen Worten bilden der Behälter und der Deckel u. A. ein Gehäuse des Sicherheitsbehältnisses aus. Der Behälter und der Deckel können aus einem nicht brennbaren und/oder elektrisch nicht leitenden Material bestehen. Beispielsweise kann ein Aluminiumschaum für ein Aluminiumschaum-Gehäuse verwendet werden.

Insbesondere weisen der Behälter und der Deckel einen mehrteiligen Wandaufbau auf. Dadurch kann besonders vorteilhaft ein brandresistentes sowie vibrations- und stoßabsorbierendes Sicherheitsbehältnis ausgebildet werden, das einem sehr hohen Innendruck widerstehen kann.

Beispielsweise kann das Sicherheitsbehältnis, insbesondere bei einem im Innern ausgelösten Brand, für einen Zeitraum t1 für drei bis sechs Stunden, insbesondere für zumindest vier Stunden, gas- und rauchdicht verbleiben. Dies kann insbesondere dadurch ermöglicht werden, dass das Sicherheitsbehältnis einem sehr hohen Innendruck standhalten kann. Wichtig dafür ist insbesondere die Verbindung, insbesondere eine gas- und rauchdichte Verbindung, zwischen dem Deckel und dem Behälter, sowie die Materialverbindung in den Eckbereichen des Deckels bzw. des Behälters. Dies kann durch geeignete Materialwahl, unterschiedliche Dichtungsmittel sowie durch eine geometrische Gestaltung der Verbindung- bzw. Eckbereichen erfolgen.

Bevorzugt bleibt in dem Zeitraum t1 die Temperatur in einem Abstand von 8 bis 12 cm, insbesondere 10 cm, von der Oberfläche des Gehäuses entfernt, d. h. des Behälters und des Deckels entfernt, unter 200 °C.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform kann eine Oberseite des Deckels eben ausgebildet sein, sodass eine Aufstandsfläche für ein weiteres Sicherheitsbehältnis ausbildbar ist. Vorteilhaft ist dies durch die in den Deckel und/oder den Behälter integrierte Löscheinrichtung möglich. Die Löscheinrichtung überragt bevorzugt nicht die Oberseite des Deckels. Da das Sicherheitsbehältnis gas- und rauchdicht ausgebildet ist, müssen keine Öffnungen zur Abführung von Innendruck an der Oberfläche des Deckels oder des Behälters angeordnet sein, sodass ebenso keine Beeinflussungen, insbesondere durch Rauchentwicklung, in der Umgebung entstehen. Hingegen kann das Sicherheitsbehältnis einem sehr hohen Innendruck standhalten und ohne Druckausgleichselemente bzw. Ventile als Verbindung zur Umgebung ausgebildet sein.

Gemäß einer Weiterbildung kann die Löscheinrichtung von außerhalb des Sicherheitsbehältnisses nicht sichtbar angeordnet und/oder druckmittelfrei ausgebildet sein. Auf diese Weise ist eine ebene Ausbildung der Oberseite des Deckels vorteilhaft möglich. Die Löscheinrichtung kann an einer Unterseite des Deckels angeordnet bzw. dort sichtbar angeordnet sein. Bevorzugt ist die Löscheinrichtung als druckgasfreies Löschsystem und daher ohne Treibmittel ausgebildet. Vorteilhafterweise ist dadurch eine lageunabhängige Benutzung, d. h. auch über Kopf, möglich. Das Löschmittel ist bevorzugt in einem Behälter gelagert. Das druckgasfreie Löschsystem kann einen Behälter umfassen, der sich bei Aktivierung der Löscheinrichtung zusammenzieht. Dadurch kann das Löschmittel ohne Einsatz von Treibgas gleichmäßig aus dem Behälter ausgestoßen werden. Bevorzugt besteht das Füllgut nur aus einem Wirkstoff, wodurch eine reduzierte Rauchentwicklung entsteht. Dies ist insbesondere vorteilhaft in Verbindung mit dem gas- bzw. rauchdichten Sicherheitsbehältnis, da der Druck im Innern weniger stark ansteigt.

Gemäß einer Ausführungsform kann das Sicherheitsbehältnis zum Transport oder zur Lagerung von einer oder mehreren Lithiumbatterien, Chemikalien und/oder Munition geeignet sein. Das Sicherheitsbehältnis eignet sich daher auch für den Transport von explosiven Stoffen.

Gemäß einer Ausführungsform kann der Deckel vollständig abnehmbar oder anscharniert an dem Behälter angeordnet sein und zumindest eine Verbindung von Behälter und Deckel über ein Verriegelungselement erfolgen. Ist der Deckel vollständig abnehmbar ausgebildet, kann dieser auch durch einen anderen Deckel, beispielsweise mit einer anderen Deckelform oder -größe, ausgetauscht werden. Auf diese Weise kann das Sicherheitsbehältnis auf individuelle Einsatzbedingungen bzw. Abmessungen der zu transportierenden Güter angepasst werden. Ist der Deckel anscharniert, kann er auf unverlierbare Weise aufgeklappt bzw. zugeklappt werden.

Gemäß einer bevorzugten Ausführungsform kann das Verriegelungselement an einem Kantenbereich des Sicherheitsbehältnisses angeordnet sein. Ein Kantenbereich kann als Kante zwischen zwei abgewinkelten Seitenflächen des Sicherheitsbehältnisses verstanden werden. Auf diese Weise kann ein Deckel ausgebildet werden, der lediglich aus einem ebenen Element, sozusagen aus einer Platte, besteht. Der Kantenbereich kann insbesondere den Eckbereich des Sicherheitsbehältnisses ausbilden.

Gemäß einer besonders bevorzugten Ausführungsform kann an einem Kontaktbereich zwischen Behälter und Deckel zumindest ein Dichtungselement und/oder Arretierungsmittel angeordnet sein. Vorteilhaft kann dadurch das Sicherheitsbehältnis gas- und rauchdicht verschlossen werden sowie über den Zeitraum t1 gas- und rauchdicht verbleiben. Der Kontaktbereich kann einen Kantenbereich bzw. eine Kante, insbesondere einen Eckbereich, des Sicherheitsbehältnisses ausbilden, wobei in einer derartigen Ausführungsform der Decke lediglich aus einem ebenen Element bestehen kann. Ebenso kann der Kontaktbereich an einer beliebigen Position an bzw. in der Seite zw. Seitenfläche des Sicherheitsbehältnisses vorliegen.

Das zumindest eine Dichtungselement ist bevorzugt in einem Formstück im Deckel und/oder in einem Formstück im Behälter integriert oder geklemmt. Ein Formstück ist bevorzugt ein Element mit einem Vollquerschnitt, das eine mechanische Verbindung und/oder eine Kontaktfläche zwischen dem Deckel und dem Behälter ausformt. Durch die Formstücke kann der Kontaktbereich zwischen dem Deckel und dem Behälter beliebige Formen aufweisen, wobei der Querschnitt der Formstücke unabhängig von den Bauelementen des Wandaufbaus des Deckels bzw. des Behälters ist.

Der Behälter und der Deckel kontaktieren sich bevorzugt über die komplette Länge des Kontaktbereichs, insbesondere durch das jeweilige Formstück. Der Kontaktbereich kann umlaufend um das Sicherheitsbehältnis verlaufen. Vorteilhaft ist das zumindest eine Arretierungsmittel als Stiftverbindung ausgebildet. Weist das Sicherheitsbehältnis beispielsweise eine quadratische oder rechtwinklige Geometrie auf, kann in jedem Eckbereich des Kontaktbereichs ein Arretierungsmittel angeordnet sein. Dieses kann aus einem Arretierungsbolzen in dem Behälter und als entsprechende Ausnehmung in dem Deckel bestehen, oder umgekehrt.

Vorteilhafterweise kann an dem Kontaktbereich eine umlaufende Abdichtung und/oder Arretierung erfolgen. Zur Ausbildung einer wasser-, gas- sowie rauchdichten Verbindung zwischen dem Behälter und dem Deckel kann zumindest ein umlaufendes Dichtungselement in dem Kontaktbereich angeordnet sein. In einer Ausführungsform können zwei umlaufende Dichtungselemente in dem Kontaktbereich angeordnet sein, wobei ein Dichtungselement in dem Deckel und das andere Dichtungselement in dem Behälter integriert bzw. fixiert ist. In einem geschlossenen Zustand des Sicherheitsbehältnisses sind die beiden Dichtungselemente bevorzugt versetzt zueinander angeordnet und/oder nicht miteinander in Kontakt.

Der Deckel und der Behälter können in dem Kontaktbereich über eine Nut-Feder-Verbindung verbunden sein. Die Nut kann beispielsweise in dem Deckel, die Feder an dem Behälter angeordnet sein, oder andersrum. Folglich kann der Deckel oder der Behälter einen umlaufenden Vorsprung bzw. eine dazu korrespondierende umlaufende Aussparung aufweisen. Folglich besteht zwischen dem Deckel und dem Behälter eine mechanische Verbindung, die ein Verschieben des Deckels quer zu dem Behälter verhindert. Das zumindest eine Dichtungselement ist bevorzugt im geschlossenen Zustand des Sicherheitsbehältnisses mit der Nut sowie mit der Aussparung in Kontakt.

Gemäß einer vorteilhaften Ausführungsform kann das Dichtungselement zumindest ein Dichtungsprofil, ein Brandschutzlaminat und/oder eine Dichtungsschnur umfassen. Vorteilhaft ist auf diese Weise eine gas- und rauchdichte Verbindung, insbesondere über den Zeitraum t1, möglich. Das Dichtungsprofil, das Brandschutzlaminat und/oder die Dichtungsschnur können in einem Formstück im Deckel und/oder einem Formstück im Behälter integriert bzw. geklemmt sein. Die Dichtungsschnur sowie das Dichtungsprofil sind bevorzugt hitzebeständig sowie umlaufend um einen Umfang des Sicherheitsbehältnisses und somit an dem komplett umlaufenden Kontaktbereich angeordnet. Das Dichtungsprofil kann ebenso aus einem expandierenden Dichtelement, insbesondere aus einer aufschäumenden Kombi-Dichtung, bestehen. In einer Ausführungsform kann ein aufschäumendes Dichtelement benachbart zu einer Dichtschnur im Kontaktbereich angeordnet sein, sodass sich die beiden Dichtungselemente in einem geschlossenen Zustand des Sicherheitsbehältnisses nicht berühren. Bei einer Nut-Feder-Verbindung zwischen Deckel und Behälter sind die beiden Dichtungselemente bevorzugt in einem bodenseitigen Bereich der Aussparung angeordnet. Der bodenseitige Bereich wird in einem geschlossenen Zustand des Sicherheitsbehältnisses gegen die Feder, d. h. gegen den Vorsprung, gedrückt, sodass die Abdichtung in diesem Bereich noch verstärkt wird.

Bevorzugt ist ein Formstück an/in dem Deckel und ein Formstück an/in dem Behälter angeordnet bzw. integriert. Insbesondere kann die Nut-Feder-Verbindung durch ein Formstück, das am Behälter angeordnet ist und ein Formstück, das am Deckel angeordnet ist, ausgebildet sein. In einer weiteren Ausführungsform können beide Formstücke einen L-förmigen Querschnitt aufweisen. Bevorzugt steht zumindest ein Schenkel des Formstücks des Deckels mit einem Schenkel des Formstücks des Behälters in einem geschlossenen Zustand in Kontakt.

Die Formstücke können ebenso den Kantenbereich, d. h. den Eckbereich, des Sicherheitsbehältnisses ausbilden. In einer Ausführungsform kann ein Formstück, insbesondere das Formstück des Behälters, umlaufend einen L-förmigen Querschnitt aufweisen, sodass ein weiteres Formstück, insbesondere das des Deckels, mit einem rechteckigen oder quadratischen Querschnitt die L-Form ausfüllen kann. In einer derartigen Ausführungsform ist der Kontaktbereich bevorzugt in einem Eckbereich des Sicherheitsbehältnisses angeordnet, sodass der Deckel als ebenes plattenförmiges Element ausgebildet ist. An beiden Schenkeln des L-förmigen Querschnitts kann ein Dichtungselement, insbesondere ein umlaufendes Dichtungsprofil wie beschrieben, angeordnet sein, sodass eine wasser-, gas- sowie rauchdichten Verbindung entsteht.

Die jeweiligen Formstücke verlaufen bevorzugt umlaufend um den Deckel bzw. um den Behälter. An dem jeweiligen Formstück können Bauelemente eines Wandaufbaus des Deckels bzw. des Behälters fixiert sein, insbesondere eine Sandwichplatte und/oder eine Innenauskleidung. Durch die Formstücke kann daher eine mechanische Verbindung zwischen dem Deckel und dem Behälter vereinfacht ausgeformt werden, da die Elemente des Wandaufbaus nicht als Kontaktbereich dienen.

Eine Verbindung zwischen den beiden Formstücken kann über zumindest ein Verschlusselement erfolgen, das insbesondere zumindest teilweise durch beide Formstücke hindurchgreift. Das Verschlusselement kann beispielsweise als Gewindeelement, Bajonettverschluss oder als Verriegelungsstift ausgebildet sein und insbesondere einen Griff aufweisen. Bevorzugt sind entlang der Formstücke zumindest zwei, insbesondere zumindest vier Verschlusselemente angeordnet. Das Verschlusselement kann jeweils ein Verriegelungselement ausbilden.

Eine Verbindung zwischen dem jeweiligen Formstück und dem Deckel bzw. dem Behälter kann über zumindest ein mechanisches Verbindungsmittel erfolgen. Das Verbindungsmittel kann als Bolzen-, Schrauben- oder Schweißverbindung ausgebildet sein. Weiterhin kann eine Abdichtung an dem Verbindungsmittel angeordnet werden. Insbesondere kann das Verbindungsmittel durch ein Dichtungselement hindurchgreifen. Es ist ebenso denkbar, dass bei dem Herstellungsprozess der Behälter- bzw. Deckelwandung das jeweilige Formstück mit angegossen wird.

Gemäß einer vorteilhaften Ausführungsform kann an dem Behälter oder dem Deckel zumindest eine von außerhalb des Sicherheitsbehältnisses sichtbare Kontrollanzeige angeordnet sein. Vorteilhaft ist durch die Kontrollanzeige der Zustand im Inneren des Sicherheitsbehältnisses kontrollierbar bzw. abrufbar. Durch eine von außen sichtbare Zustandskontrolle und zumindest einem im Innern integrierten Messfühler kann so abgefragt werden, ob das Gut oder der Stoff im Inneren beispielsweise raucht oder brennt.

Gemäß einer Ausführungsform kann die Verbindung zwischen Behälter und Deckel innendruckresistent ausgebildet sein. Dies kann durch eine mechanische Verbindung, beispielsweise durch die Formstücke, insbesondere als einer Nut-Feder-Verbindung, in Kombination mit zumindest einem Dichtungselement erfolgen. Vorteilhaft ist auf diese Weise eine robuste Bauart mit einer Dichtigkeit gegenüber Gas und Rauch, auch nach einem Fall-Test, möglich.

Bei einer vorteilhaften Ausführungsform kann der Behälter eine oder mehrere Trennelemente zur Ausbildung zumindest zweier Kammern aufweisen. Vorteilhafterweise können dadurch mehrere baugleiche oder unterschiedliche Güter innerhalb eines Sicherheitsbehältnisses getrennt voneinander transportiert werden. Bevorzugt sind die Güter dadurch gegen ein verrutschen gesichert, wodurch eine Beschädigung vermieden wird. Es ist ebenso denkbar die Trennelemente an die Außengeometrie der zu transportierenden Güter zumindest teilweise anzupassen, um die Stabilität während des Transports zu erhöhen.

Gemäß einer vorteilhaften Ausführungsform des kann das Sicherheitsbehältnis mit einem baugleichen Sicherheitsbehältnis stapelbar sein. Vorteilhaft kann während dem Transport in einem Flugzeug, Lkw oder Schiff dadurch Platz eingespart werden. Beispielsweise kann eine Vielzahl baugleicher oder zumindest ähnlicher Sicherheitsbehältnisse nebeneinander sowie aufeinander gestapelt und in einem Container transportiert werden.

Gemäß einer vorteilhaften Ausführungsform können der Behälter und/oder der Deckel zumindest eine metallische Sandwichplatte und eine nicht brennbare Innenauskleidung aufweisen. Die metallische Sandwichplatte kann beispielsweise elektrisch nicht leitend, vibrations- und stoßabsorbieren und/oder wasserdicht sein. Ebenso können diese aus einem Aluminiumschaum bestehen.

Gemäß einer vorteilhaften Ausführungsform können der Behälter und/oder der Deckel zumindest ein Brandschutzlaminat, eine Brandschutzbeschichtung und/oder eine Brandschutzplatte aufweisen. Zumindest eines dieser Elemente kann dabei zwischen der metallischen Sandwichplatte und der nicht brennbaren Innenauskleidung angeordnet sein. Dadurch können die Brandschutzeigenschaften weiter verbessert werden.

Gemäß einer Weiterbildung können der Behälter und/oder der Deckel zumindest teilweise aus Aluminium bestehen. Auf diese Weise kann das Sicherheitsbehältnis mit einem geringen Gewicht ausgebildet werden.

Durch Kombination der obigen Ausgestaltungen kann insbesondere ein Transport- bzw. Lagerbehältnis ausgebildet werden, das aufgrund einer Kombination aus druck- und stoßaufnehmender Gehäusekonstruktion und einem gasdichten Dichtung- und Verschlusssystem den Transport von gefährlichen Gütern bzw. explosiven Stoffen in unterschiedlichen Transportmitteln, wie Flugzeugen, Schiffen oder Landfahrzeugen, entsprechend den gültigen Vorschriften und Normen ermöglicht. Bevorzugt erfolgt dies in Kombination mit einer feuerfesten Einlage in dem Deckel bzw. dem Behälter sowie einer integrierten druckgasfreien Löschanlage.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Ausführungsform des Sicherheitsbehältnisses in einer isometrischen Darstellung;
- Fig. 2: den Behälter aus Fig. 1;
- Fig. 3: den Deckel aus Fig. 1;
- Fig. 4: einen Querschnitt durch den Behälter aus Fig. 2;
- Fig. 5: zwei Ausführungsformen der Behälter- bzw. Deckelwandung als Schnittdarstellung;
- Fig. 6: zwei Ausführungsformen der Behälter- bzw. Deckelwandung als Schnittdarstellung;
- Fig. 7: zwei Ausführungsformen des Dichtungselements als Schnittdarstellung;
- Fig. 8: ein weiteres Dichtungselement als Schnittdarstellung;
- Fig. 9: zwei weitere Dichtungselemente als Schnittdarstellung;
- Fig. 10: eine Ausführungsform des Verriegelungselements als Schnittdarstellung;
- Fig. 11: ein weiteres Verriegelungselement als Schnittdarstellung;
- Fig. 12: ein weiteres Verriegelungselement als Schnittdarstellung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

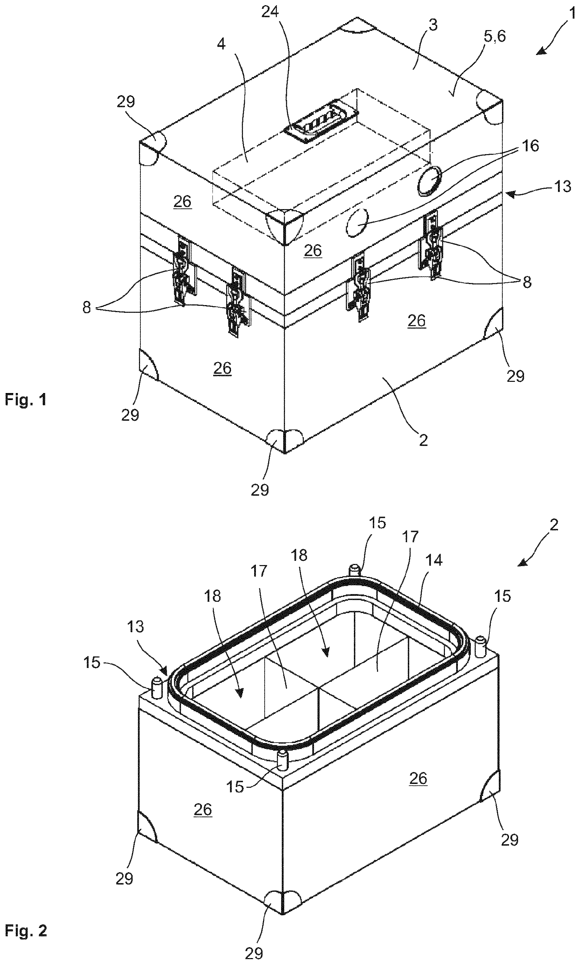

Fig. 1 zeigt eine Ausführungsform des Sicherheitsbehältnisses 1 in einer isometrischen Darstellung. Dieses weist eine rechteckige Grundform mit einem Behälter 2 und einem Deckel 3 auf. Der Behälter 2 sowie der Deckel 3 können aus einem Aluminiumschaumgehäuse bestehen und an kundenspezifische Abmessungen mit kundenspezifischen Gehäusefarben angepasst werden. An einem Kontaktbereich 13 zwischen Behälter 2 und Deckel 3 sind an jeder Seitenfläche 26 zwei Verriegelungselemente 8 angeordnet. Durch den um den Umfang des Sicherheitsbehältnisses 1 umlaufenden Kontaktbereich 13 sowie die Verriegelungselemente 8 kann das Innere des Sicherheitsbehältnisses 1 wasserdicht sowie über zumindest einen Zeitraum t1 gas- und rauchdicht verbleiben. So kann ein Transport von gefährlichen bzw. brennbaren Stoffen oder Gütern ermöglicht werden. In einer nicht dargestellten Ausführungsform kann der Kontaktbereich 13 zwischen Behälter 2 und Deckel 3 in einem Kantenbereich des Sicherheitsbehältnisses 1 liegen. In einer derartigen Ausführungsform kann der Deckel 3 lediglich eine ebene Platte mit einem umlaufenden Kontaktbereich 13 sein.

Innerhalb des Deckels 3 ist in Fig. 1 eine Löscheinrichtung 4 mit gestrichelten Linien angedeutet. Diese ist von außerhalb des Sicherheitsbehältnisses 1 nicht sichtbar, da diese an einer Unterseite des Deckels 3 angebracht ist. An einer Oberseite 5 des Deckels 3 ist lediglich ein Griff 24 sichtbar, welche abgeklappt bzw. versenkt werden kann. Dadurch entsteht eine ebene Fläche, die als Aufstandsfläche 6 für ein weiteres, nicht dargestelltes, Sicherheitsbehältnis 1' dienen kann. Das Sicherheitsbehältnis 1 kann daher stapelbar sein. In den Eckbereichen ist jeweils ein Eckenschutz 29 angeordnet, um die Stabilität zu erhöhen und Stöße, beispielsweise bei einem Fall-Test, zu absorbieren.

In Fig. 2 ist der Behälter 2 aus Fig. 1 dargestellt. An der Kontaktfläche 13 sind das umlaufende Dichtungselement 14 sowie Arretierungsmittel 15 in Form von Arretierungsbolzen erkennbar. Das Dichtungselement 14 ist an einem Vorsprung am Behälter 2 angeordnet, wobei der Vorsprung einen Teil einer Nut-Feder-Verbindung im Kontaktbereich 13 ausbildet. Im Innern sind mehrere Trennelemente 17 dargestellt, durch welche in dieser Ausführungsform vier einzelne Kammern 18 entstehen. In jeder dieser Kammern 18 können unterschiedliche oder gleiche Güter bzw. Stoffe getrennt voneinander transportiert und vor Beschädigungen geschützt werden. Eine andere Anzahl an Kammern sowie andere Geometrie der Trennelemente ist ebenso denkbar.

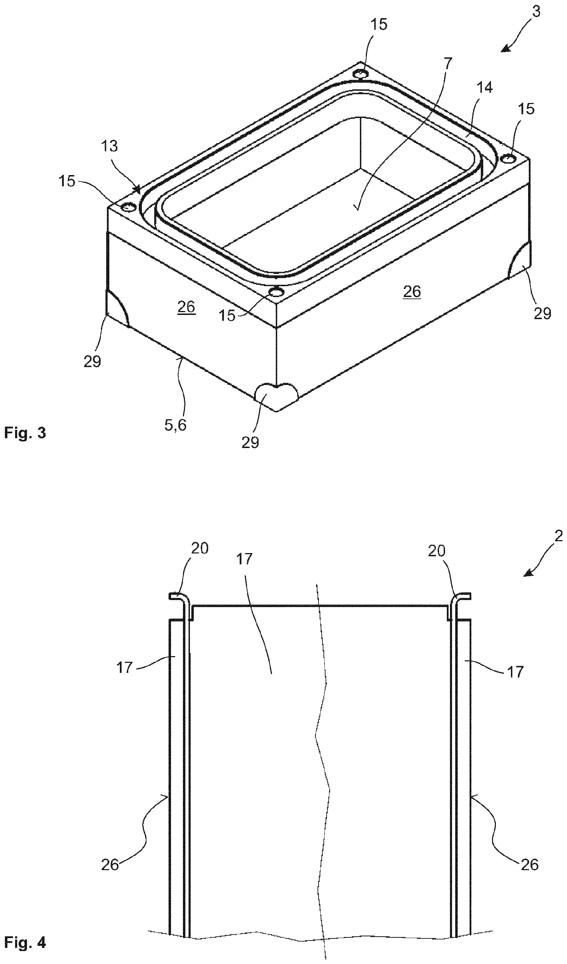

In Fig. 3 ist der Deckel 3 aus Fig. 1 dargestellt. Zur Ausbildung einer wasser-, gas- sowie rauchdichten Verbindung zwischen Behälter 2 und Deckel 3 ist an der Position des Dichtungselements 14 in dem Deckel 3 eine Aussparung angeordnet, die einen weiteren Teil der Nut-Feder-Verbindung ausbildet. Die Arretierungsmittel 15 bestehen aus Aufnahmelöchern für die Bolzen. Die Nut-Feder-Verbindung sowie die Arretierungsmittel 15 bilden eine mechanische Verbindung zwischen dem Deckel 3 und dem Behälter 2 aus. An der Unterseite 7 des Deckels 3 kann das Löschsystem (nicht dargestellt) integriert sein. Dieses kann an der Unterseite 7 überstehen oder innerhalb des Deckels 3 liegen. Bei einem Löschvorgang kann Löschmittel direkt in dem Inneren des Sicherheitsbehältnisses 1 ausgegeben werden und dort verbleiben.

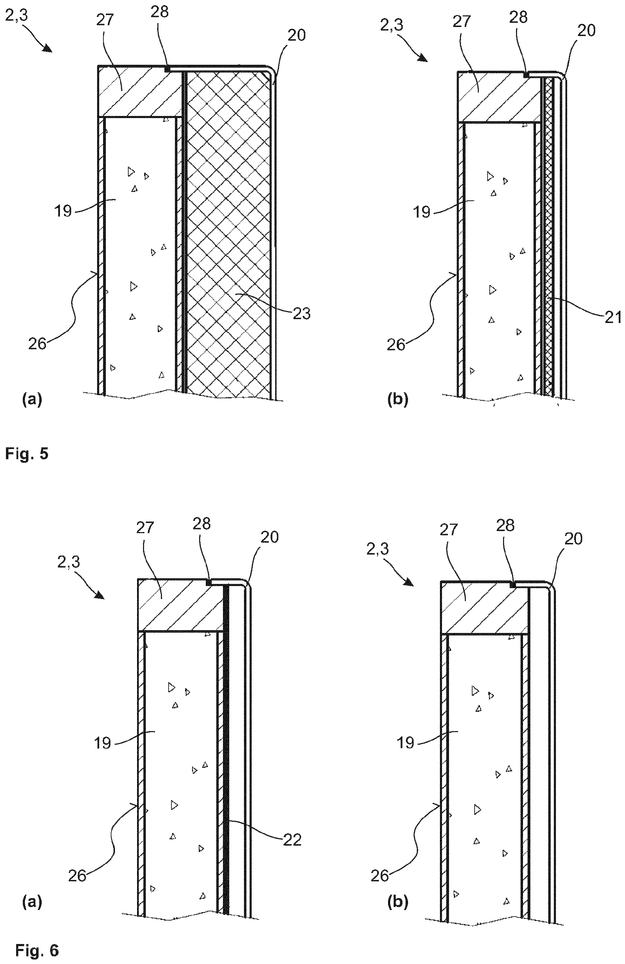

Fig. 4 zeigt einen Querschnitt durch den Behälter 2 aus Fig. 2. Dargestellt ist die Innenauskleidung 20 mit einer Trennwand 17. Die Trennwand 17 ist in dieser Ausführungsform durch die Innenauskleidung 20 gesteckt und dadurch verankert. An der Innenauskleidung 20 bzw. der Behälterwandung können die Trennelemente 17 auch in anderer Weise montiert sein. Die Innenauskleidung 20 ist bevorzugt nicht brennbar ausgebildet. Zwischen der Sandwichplatte 19 und der Innenauskleidung 20 können weitere Füll- bzw. Dämmelemente angeordnet sein. Mögliche Ausführungsformen werden in den Figs. 5 und 6 näher erläutert.

Fig. 5 zeigt zwei Ausführungsformen der Behälter- bzw. Deckelwandung als Schnittdarstellung. Die Sandwichplatte 19 kann als metallische Sandwichplatte ausgebildet sein. Zwischen der Innenauskleidung 20 und der Sandwichplatte 19 ist in Fig. 5 (a) eine Brandschutzplatte 23 angeordnet. Die Innenausstattung 20 grenzt mit einer Abdichtung 28 an ein Formstück 27, das oberhalb der Sandwichplatte 19 liegt. Das Formstück 27 kann den Kontaktbereich 13 ausbilden und Teil eines Dichtungselements 14 zwischen Behälter 2 und Deckel 3 sein. In der Ausführungsform in Fig. 5 (b) ist anstatt der Brandschutzplatte 23 ein Brandschutzlaminat 21 angeordnet. Dieses füllt nicht den kompletten Zwischenraum zwischen der Innenauskleidung 20 und der Sandwichplatte 19 aus, ist jedoch vollflächig mit einer Seite der Sandwichplatte 19 verbunden. Die Innenauskleidung 20 kann in einer derartigen Ausführungsform beispielsweise brennbar ausgebildet sein.

Zwei weitere Ausführungsformen der Behälter- bzw. Deckelwandung als Schnittdarstellung sind in Fig. 6 zu sehen. Gemäß Fig. 6 (a) ist eine Brandschutzbeschichtung 22 vorgesehen, in der Ausführungsform gemäß Fig. 6 (b) verbleibt der Zwischenraum zwischen Innenausstattung 20 und Sandwichplatte 19 ohne weiteres Brandschutzelement. Vorteilhafterweise ist die Innenauskleidung 20 gemäß der Ausführungsform nach Fig. 6 (b) nicht brennbar.

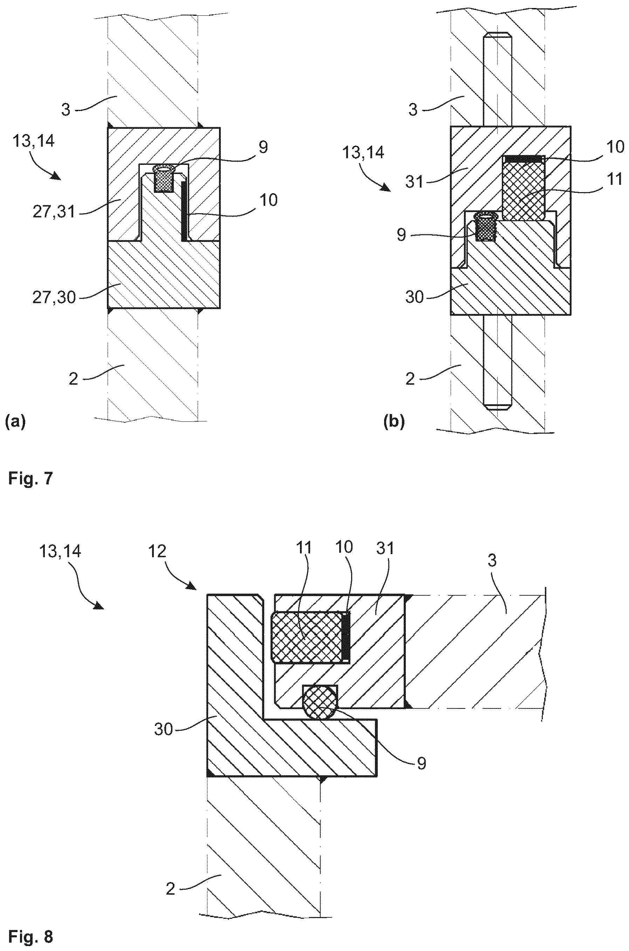

Fig. 7 zeigt zwei Ausführungsformen des Dichtungselements 14 als Schnittdarstellung. Der Behälter 2 bzw. der Deckel 3 können jeweils eine Wandung gemäß den Figs. 5 bzw. 6 aufweisen. Das Formstück 27 aus Fig. 5 bzw. 6 entspricht im Falle des Behälters 2 dem Formstück 30, im Falle des Deckels 3 dem Formstück 31. In Fig. 7 (a) ist das Dichtungselement 14 vergleichbar zu Fig. 2 bzw. 3 ausgeformt, mit einer umlaufenden Nut-Feder-Verbindung zwischen den beiden Formstücken 30, 31. Die Dichtungsfunktion wird durch ein Dichtungsprofil 9 sowie ein Brandschutzlaminat 10 verstärkt. Das Dichtungsprofil 9 ist beispielsweise hitzebeständig und/oder besteht aus einer aufschäumenden Kombi-Dichtung. Das Brandschutzlaminat 10 kann an unterschiedlichen Positionen an der Nut bzw. der gegenüberliegenden Ausnehmung innerhalb der Formstücke 30, 31 angeordnet sein. Das Dichtungselement 14 gemäß Fig. 7 (b) weist zusätzlich eine Dichtungsschnur 11 auf. In einer derartigen Ausführungsform ist das Brandschutzlaminat 10 an der Dichtungsschnur 11 angeordnet, welche den Grund der Nut ausbildet und daher auf einem bodenseitigen Bereich der Aussparung, welche die Nut ausbildet, angeordnet ist. Die Dichtungsschnur 11 und das Dichtungsprofil 9 sind umlaufend um das Sicherheitsbehältnis 1 sowie benachbart zueinander angeordnet, d. h. das Dichtprofil 9 und die Dichtungsschnur 11 berühren sich in einem dargestellten geschlossenen Zustand des Sicherheitsbehältnisses 1 nicht. Oberhalb sowie unterhalb der Formstücke 30, 31 ist jeweils ein mechanisches Verbindungsmittel sichtbar, das eine Verbindung zwischen dem Behälter 2 bzw. dem Deckel 3 und dem jeweiligen Formstück 30, 31 herstellt. Das Verbindungsmittel kann als Bolzen oder Schraube ausgebildet sein. Ebenso ist eine Schweißverbindung denkbar. In einer weiteren Ausführung kann eine Abdichtung an dem Verbindungsmittel angeordnet werden. Weiterhin kann bei dem Herstellungsprozess der Behälter- bzw. Deckelwandung das jeweilige Formstück 30, 31 mit angegossen werden.

Das Dichtungselement 14 in Fig. 8 bildet einen Kantenbereich 12 des Sicherheitsbehältnisses 1 aus. Der Deckel 3 kann daher als ebenes Element ausgebildet sein. Der Kantenbereich 12 wird durch das Formstück 30 des Behälters 2 gebildet, das einen L-förmigen Querschnitt aufweist. Das Formstück 31 des Deckels 3 weist einen rechteckigen Querschnitt auf und greift in das Formstück 30 ein. Eine Dichtung zwischen den beiden Formstücken 30, 31 erfolgt durch ein Dichtungsprofil 9, ein Brandschutzlaminat 10 sowie eine Dichtungsschnur 11, die an unterschiedlichen Schenkeln des L-förmigen Querschnitts angeordnet sind.

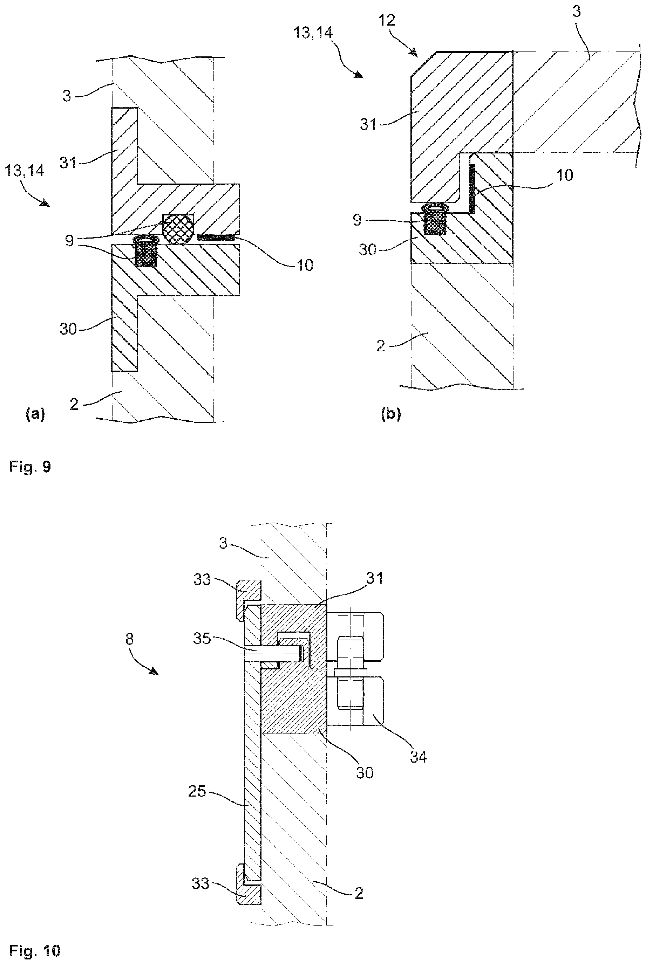

Fig. 9 zeigt zwei weitere Dichtungselemente 14 als Schnittdarstellung. Die Formstücke 30, 31 sind nicht als Nutverbindung ausgebildet. Die Formstücke 30, 31 weisen jeweils einen L-förmigen Querschnitt auf. Gemäß Fig. 9 (a) bildet jeweils ein Schenkel jedes Formstücks 30, 31 den Kontakt zwischen dem Deckel 3 und dem Behälter 2 aus. Gemäß Fig. 9 (b) sind beide Schenkel beider Formstücke 30, 31 jeweils mit dem anderen Formstück 30, 31 zumindest abschnittsweise in Kontakt, wobei das Formstück 31 des Deckels 3 den Kantenbereich 12 des Sicherheitsbehältnisse 1 ausbildet.

Die Figs. 10 bis 12 zeigen Ausführungsformen des Verriegelungselements 8 als Schnittdarstellung. Jedes der dargestellten Verriegelungselemente 8 kann für die Dichtungselemente 14 gemäß der Figs. 7 bis 9 eingesetzt werden. Fig. 10 zeigt ein Verriegelungselement 8 mit einem Dichtungselement 14 gemäß Fig. 7 (a). Ein Griffstück 25 wird über einen Verriegelungsstift 35 in den beiden Formstücken 30, 31 gehalten. An der Außenseite des Sicherheitsbehältnisses 1 ist das Griffstück 25 über zwei Sicherungselemente 33 in Position gehalten. Auf der Innenseite des Sicherheitsbehältnisses 1 ist zusätzlich eine Innenarretierung 34 mit einer Bolzenverbindung angeordnet.

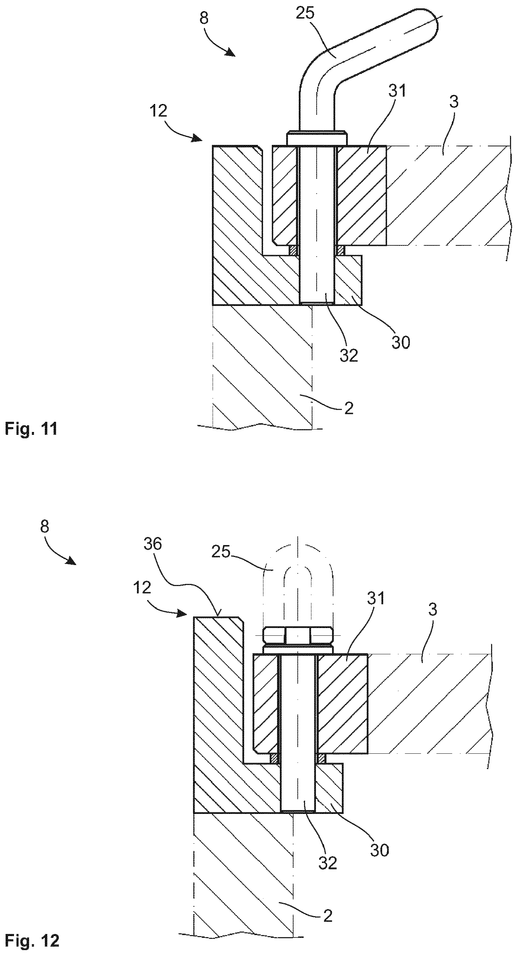

Das Verriegelungselement 8 gemäß Fig. 11 ist mit einem Dichtungselement 14 gemäß Fig. 8 dargestellt. Ein Verschlusselement 22 bildet eine zusätzliche mechanische Verbindung zwischen den beiden Formstücken 30, 31 aus. Das Verschlusselement 32 kann beispielsweise als Gewindeelement oder Bajonettverschluss ausgebildet sein. Ebenso kann es identisch zum Verriegelungsstift 35 sein.

Das Verriegelungselement 8 in Fig. 12 zeigt im Gegensatz zu Fig. 11 ein klappbares Griffstück. In einem abgeklemmten Zustand des Griffstücks 25 überragt das Formstück 30 mit einer Oberkante 36 die Oberkante des Griffstücks 25. Dadurch können mehrere baugleiche Sicherheitsbehältnisse 1 übereinander gestapelt werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Abweichend von den dargestellten Ausführungsformen kann beispielsweise der Deckel 3 an dem Behälter 2 anscharniert und dadurch verliersicher an dem Behälter 2 montiert sein.

### Bezugszeichenliste

- 1: Sicherheitsbehältnis
- 2: Behälter
- 3: Deckel
- 4: Löscheinrichtung
- 5: Oberseite
- 6: Aufstandsfläche
- 7: Unterseite
- 8: Verriegelungselement
- 9: Dichtungsprofil
- 10: Brandschutzlaminat
- 11: Dichtungsschnur
- 12: Eckbereich
- 13: Kontaktbereich
- 14: Dichtungselement
- 15: Arretierungsmittel
- 16: Kontrollanzeige
- 17: Trennelement
- 18: Kammer
- 19: Sandwichplatte
- 20: Innenauskleidung
- 21: Brandschutzlaminat
- 22: Brandschutzbeschichtung
- 23: Brandschutzplatte
- 24: Griff
- 25: Griffstück
- 26: Seitenfläche
- 27: Formstück
- 28: Abdichtung
- 29: Eckenschutz
- 30: Formstück
- 31: Formstück
- 32: Verschlusselement
- 33: Sicherungselement
- 34: Innenarretierung
- 35: Verriegelungsstift
- 36: Oberkante

## Patentansprüche

1. Sicherheitsbehältnis (1) zum Transport oder zur Lagerung von brennbaren und/oder explosiven Gütern,
mit einem Behälter (2) und einem Deckel (3), wobei in dem Behälter (2) zumindest ein brennbares und/oder explosives Gut anordenbar ist und der Deckel (3) den Behälter (2) für zumindest einen vorgegebenen Zeitraum (t1) gas- und rauchdicht verschließt,
mit einer in dem Behälter (2) und/oder in dem Deckel (3) integrierten Löscheinrichtung (4),
wobei das Sicherheitsbehältnis aus einem nicht brennbaren Material ausgebildet ist und über zumindest den vorgegebenen Zeitraum (t1) gas- und rauchdicht verbleibt.

2. Sicherheitsbehältnis nach Anspruch 1,
**dadurch gekennzeichnet,**
**dass** eine Oberseite (5) des Deckels (3) eben ausgebildet ist, sodass eine Aufstandsfläche (6) für ein weiteres Sicherheitsbehältnis (1') ausbildbar ist.

3. Sicherheitsbehältnis nach einem der vorstehenden Ansprüche,
**dadurch gekennzeichnet,**
**dass** die Löscheinrichtung (4) von außerhalb des Sicherheitsbehältnisses (1) nicht sichtbar angeordnet und/oder druckmittelfrei ausgebildet ist.

4. Sicherheitsbehältnis nach einem der vorstehenden Ansprüche,
**dadurch gekennzeichnet,**
**dass** diese zum Transport oder zur Lagerung von einer oder mehreren Lithiumbatterien, Chemikalien und/oder Munition geeignet ist.

5. Sicherheitsbehältnis nach einem der vorstehenden Ansprüche,
**dadurch gekennzeichnet,**
**dass** der Deckel (3) vollständig abnehmbar oder anscharniert an dem Behälter (2) angeordnet ist und zumindest eine Verbindung von Behälter (2) und Deckel (2) über ein Verriegelungselement (8) erfolgt.

6. Sicherheitsbehältnis nach Anspruch 5,
**dadurch gekennzeichnet,**
**dass** das Verriegelungselement (8) an einem Kantenbereich (12) des Sicherheitsbehältnisses (1) angeordnet sein.

7. Sicherheitsbehältnis nach einem der vorstehenden Ansprüche,
**dadurch gekennzeichnet,**
**dass** an einem Kontaktbereich (13) zwischen Behälter (2) und Deckel (3) zumindest ein Dichtungselement (14) und/oder Arretierungsmittel (15) angeordnet ist.

8. Sicherheitsbehältnis nach Anspruch 7,
**dadurch gekennzeichnet,**
**dass** das Dichtungselement (14) zumindest ein Dichtungsprofil (9), ein Brandschutzlaminat (10) und/oder eine Dichtungsschnur (11) umfasst.

9. Sicherheitsbehältnis nach einem der vorstehenden Ansprüche,
**dadurch gekennzeichnet,**
**dass** an dem Behälter (2) oder dem Deckel (3) zumindest eine von außerhalb des Sicherheitsbehältnisses sichtbare Kontrollanzeige (16) angeordnet ist.

10. Sicherheitsbehältnis nach einem der vorstehenden Ansprüche,
**dadurch gekennzeichnet,**
**dass** die Verbindung zwischen Behälter (2) und Deckel (3) innendruckresistent ausgebildet ist.

11. Sicherheitsbehältnis nach einem der vorstehenden Ansprüche,
**dadurch gekennzeichnet,**
**dass** der Behälter (2) eine oder mehrere Trennelemente (17) zur Ausbildung zumindest zweier Kammern (18) aufweist.

12. Sicherheitsbehältnis nach einem der vorstehenden Ansprüche,
**dadurch gekennzeichnet,**
**dass** dieses mit einem baugleichen Sicherheitsbehältnis (1') stapelbar ist.

13. Sicherheitsbehältnis nach einem der vorstehenden Ansprüche,
**dadurch gekennzeichnet,**
**dass** der Behälter (2) und/oder der Deckel (3) zumindest eine metallische Sandwichplatte (19) und eine nichtbrennbare Innenauskleidung (20) aufweisen.

14. Sicherheitsbehältnis nach einem der vorstehenden Ansprüche,
**dadurch gekennzeichnet,**
**dass** der Behälter (2) und/oder der Deckel (3) zumindest ein Brandschutzlaminat (21), eine Brandschutzbeschichtung (22) und/oder eine Brandschutzplatte (23) aufweisen.

15. Sicherheitsbehältnis nach einem der vorstehenden Ansprüche,
**dadurch gekennzeichnet,**
**dass** der Behälter (2) und/oder der Deckel (3) zumindest teilweise aus Aluminium bestehen.
